# EUROPEAN PATENT APPLICATION

(11) **EP 2 375 413 A1**
(43) Date of publication of application: **12.10.2011**
(21) Application number: 10305360.9
(22) Date of filing: 08.04.2010
(51) Int. Cl.: G11B 7/24

(54) **Dual-layer super-resolution optical recording medium**

(71) Applicant: Thomson Licensing, 92130 Issy-les-Moulineaux (FR)
(72) Inventor: Pilard, Gael, 78087, Mönchweiler (DE); von Riewel, Larisa, 78050, VS-Villingen (DE)
(74) Representative: Schmidt-Uhlig, Thomas

(57) **Abstract**

A dual-layer super-resolution optical recording medium (1) is proposed. The optical recording medium (1) has at least a first super-resolution mask layer (16) and a second super-resolution mask layer (12). The second super-resolution mask layer (12) is a high-to-low layer.

## Description

The present invention relates to a super-resolution optical recording medium, and more specifically to a dual-layer super-resolution optical recording medium with an improved layer structure.

Optical data storage is generally limited by the optical resolution of the read/write-system. Straightforward methods of increasing the optical resolution include using a shorter wavelength and a larger numerical aperture NA, at the costs of lens complexity. As an alternative a so-called super-resolution near field structure (Super-RENS) can be placed directly above a data layer of the optical recording medium, which significantly reduces the effective size of a light spot used for reading from and/or writing to the optical recording medium. Optical recording media with such a Super-RENS structure offer the possibility to increase the data density by a factor of 3 to 4 in one dimension compared to a regular optical recording medium. Super-RENS structures formed of a metal oxide or a polymer compound for recording of data and a phase-change layer formed of a GeSbTe or a AgInSbTe (AIST, a compound of silver, indium, antimony, and tellurium) based structure for reproducing of data are known from WO 2005/081242 and US 2004/0257968, respectively. A further example of a super-RENS structure is described in WO 2004/032123. In case a semiconductor such as InSb (indium antimonide) is used for the Super-RENS structure, free charge carriers are generated in the semiconductor layer upon illumination with a reading or recording light beam. The resulting changes of the optical properties of the semiconductor are used for achieving the Super-RENS effect.

Dual-layer optical recording media have been commonly used in the industry since the availability of the DVD format. For example, the dual-layer concept has been successfully adapted to BluRay disks. Realization of the dual-layer concept generally is a challenging task because of the reflectivity and transmission factors that the two data layers need to fulfill. This task is even more challenging for a dual layer super-resolution optical recording medium, because the super-resolution effect stems from the reflectivity changes of the so-called mask layer.

As indicated above, different kinds of mask layers have been proposed and tested in order to achieve high carrier-to-noise ratios for marks which are below the resolution of the optical read-out system. Among them InSb is one of the most successful because of its large reflectivity increase upon irradiation with a high laser power. Other material like AIST or SbTe (antimony telluride) have shown promising results. However, these materials behave differently, i.e. they show a decrease in reflectivity upon irradiation with a high laser power. Therefore, the super-resolution read-out signal is inverted, which has to be compensate by using a so-called mother stamper with an inverted pit structure.

The constraints on the reflectivity and transmission of the two layers of a super-resolution dual-layer optical recording medium pose a limit on the super-resolution effect that can be expect from those layers. The first data layer reached by the laser light needs to have a sufficiently large transmission factor in order to enable read-out of the second data layer, which in turn has to have a sufficiently large reflectivity. As a consequence of the high reflectivity value that is necessary for the second data layer, the super-resolution effect of a classical layer stack using an InSb mask layer is very limited. An additional reflective layer, for example a metal layer, is necessary to increase the reflectivity. This layer, however, de facto limits the relative increase of the reflectivity stemming from the super-resolution effect achieved at high read-out laser power.

It is an object of the invention to propose an improved design of a dual-layer super-resolution optical recording medium. According to the invention, the optical recording medium has at least a first super-resolution mask layer and a second super-resolution mask layer. The second super-resolution mask layer is a high-to-low layer.

An idea of the present invention is to use a super-resolution material inducing a high-to-low reflectivity change upon radiation of a high laser power read-out for the second super-resolution mask layer. Starting from a high reflectivity value, for example 70%, there still is some potential for a reflectivity decrease. In contrast, the potential for a reflectivity increase is rather limited. The use of a high-to-low material leads to an inverted signal for super-resolution structures. This issue is easily resolved by using a so-called mother stamper with an inverted pit structure.

Advantageously, the second super-resolution mask layer is a phase-change layer, e.g. an AIST layer or an SbTe layer. It has been found that the total reflectivity achieved by a phase-change layer using AIST or SbTe is higher than the reflectivity of a layer stack based on InSb. Therefore, the use of a mask layer material like AIST or SbTe for the second super-resolution mask layer is a good solution to achieve the desired reflectivity.

The first super-resolution mask layer is preferably a low-to-high layer, e.g. an InSb layer. The low-to-high material InSb has already been proven to be suitable for the first super-resolution mask layer, as for this layer the required reflectivity is much lower.

Alternatively, the first super-resolution mask layer is a high-to-low layer, e.g. an AIST layer or an SbTe layer. In order to simplify the manufacturing process it is an advantageous solution to use the same material for the first super-resolution mask layer and the second super-resolution mask layer.

For a better understanding the invention shall now be explained in more detail in the following description with reference to the figures. It is understood that the invention is not limited to this exemplary embodiment and that specified features can also expediently be combined and/or modified without departing from the scope of the present invention as defined in the appended claims. In the figures:
- Fig. 1: shows the principle of a dual layer optical recording medium,
- Fig. 2: illustrates an exemplary layer stack of a dual layer super-resolution optical recording medium according to the invention,
- Fig. 3: depicts results of reflectivity measurements for layer stacks containing different mask layer materials,
- Fig. 4: shows the measured reflectivity and carrier-tonoise ratio of a super-resolution optical recording medium with an SbTe mask layer, and
- Fig. 5: shows the calculated reflectivity for superresolution optical recording media based on InSb and SbTe mask layers.

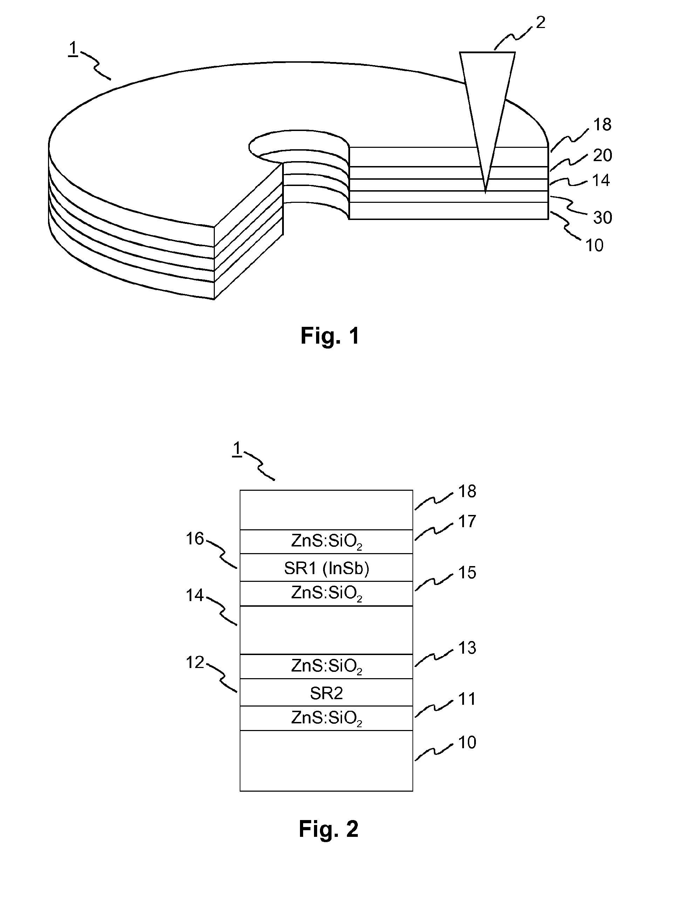

Fig. 1 shows the principle of a dual layer optical recording medium 1. Arranged on a substrate 10 are a second data layer 30 and a first data layer 20, which are separated by an intermediate or spacer layer 14 and protected by a cover layer 18. The optical recording medium 1 is accessed by a light beam 2 through the cover layer 18. The first data layer 20 is generally referred to as "L1", whereas the second data layer 30 is typically referred to as "L0". As is apparent from Fig. 1, the first data layer 20 reached by the light beam 2 needs to have a sufficiently high transmission factor in order to allow to read the second data layer 30. The second data layer 30, in turn, needs to have a sufficiently high reflectivity. As the first data layer 20 also contains information to be read, a desirable value of its transmission factor is about 50% in order to share the light between the two data layers 20, 30.

For example, in case of a BluRay read-only disk (BD-ROM) the typical transmission of the first data layer 20 (L1) is about 50%. As for BD-ROM the reflectivity of the data layers 20, 30 should be between 12 and 28%. The term reflectivity here denotes the R8H reflectivity, i.e. the reflectivity of an 8T space of the RF signal. As a consequence, the reflectivity of the second data layer 30 (L0) needs to be at least 50%. In case of a transmission of the first data layer 20 of about 40%, the reflectivity of the second data layer 30 needs to be higher than 75%.

Fig. 2 illustrates an exemplary layer stack of a dual layer super-resolution optical recording medium 1 according to the invention. In this example the first data layer consists of a InSb mask layer 16, which is sandwiched between a 50nm ZnS:SiO₂ dielectric layer 17 and a 70nm ZnS:SiO₂ dielectric layer 15. The second data layer consists of a phase-change mask layer 12, which is sandwiched between a 50nm ZnS:SiO₂ dielectric layer 13 and an 80nm ZnS:SiO₂ dielectric layer 11. The idea of the present invention is to use a super-resolution material that induces a high-to-low reflectivity change upon radiation of the high-power read-out light beam 2. Starting with a high reflectivity value, for example 70%, there still is some potential for a reflectivity decrease. In contrast, the potential for a reflectivity increase is very limited. Of course, the use of phase-change materials like AIST and SbTe leads to an inverted signal for super-resolution structures.

This problem can easily be overcome by using a so-called mother stamper with an inverted pit structure. Therefore, the advantages of a high-to-low reflectivity change can readily be applied to a dual layer structure.

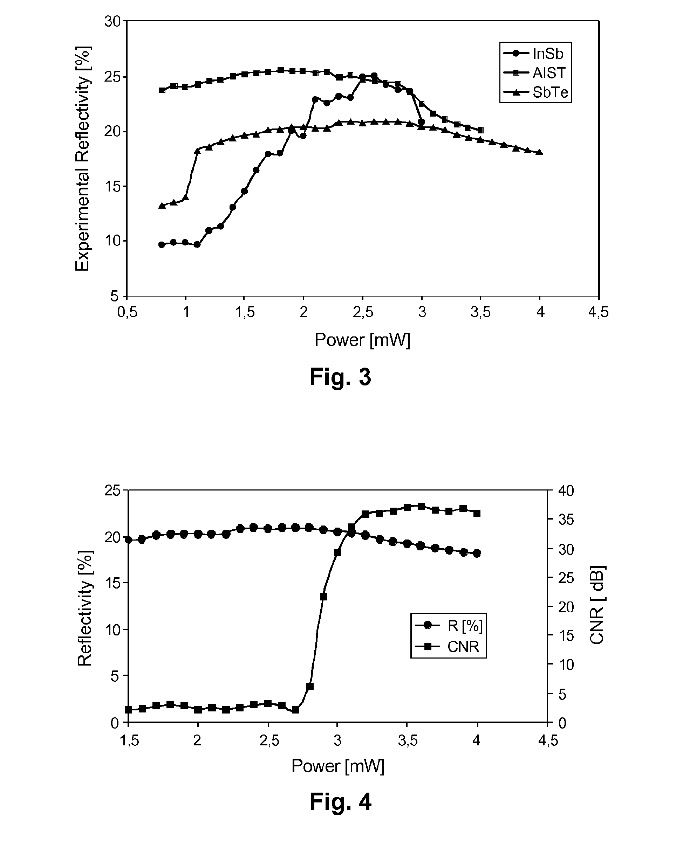

Fig. 3 shows the reflectivity behavior of super-resolution layer stacks using different mask layer materials, namely InSb, AIST, and SbTe. The measurements have been performed for a configuration (thicknesses of the active and dielectric layers) which provides a good carrier-to-noise ratio, namely between 35 and 40dB. It can be seen that the total reflectivity achieved by a phase-change layer using AIST or SbTe is higher than the reflectivity of a layer stack based on InSb, at least in the low and intermediate power regime up to about 2mW to 2.5mW.

Therefore, using a mask layer material like AIST or SbTe for the second data layer 30 is a good solution to achieve the desired reflectivity.

Fig. 4 shows experimental results of the reflectivity and the carrier-to-noise ratio against the read-out laser power obtained for a SbTe mask layer on a single tone data zone of 80nm marks.

The measurements were performed with an optical pickup designed for BluRay disks. The layer stack was not optimized for the reflectivity. It can clearly be seen that the super-resolution effect, which leads to high CNR values, occurs when the reflectivity decreases.

In the following the generalization of the above presented results shall be briefly discussed. The above results were obtained with layer stacks that were optimized for the carrier-to-noise ratio. It has been observed that the starting reflectivity obtained with a phase-change mask layer is higher than the reflectivity obtained with InSb. However, each active layer is sandwiched between two dielectric layers. The thicknesses of those dielectric layers has an influence on the reflectivity. Therefore, simulations have been performed in order to compare the initial reflectivity of layer stacks consisting of a substrate, an optional reflective layer, a first dielectric layer with a thickness d2, an active InSb or SbTe layer, a second dielectric layer with a thickness d1, and a cover layer. The results of those simulations are shown in

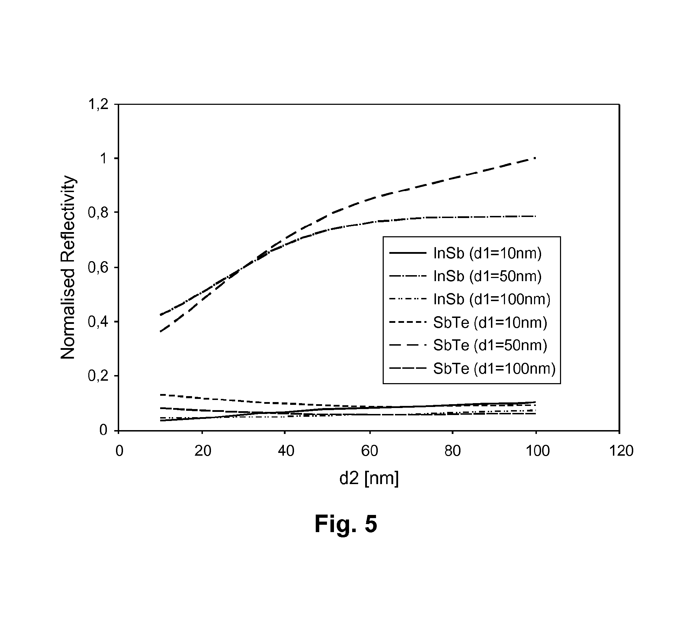

Fig. 5, where the reflectivity is normalized to unity. The thicknesses of the dielectric layers and active layers were constantly changed with a very small step between 0 and 100nm. It can be seen that in the case of d1=50nm the reflectivity of the InSb layer stack reaches a saturation point, whereas the reflectivity of the SbTe layer stack shows more potential in the chosen interval and is generally higher.

## Claims

1. Optical recording medium (1) with at least a first super-resolution mask layer (16) and a second super-resolution mask layer (12), **characterized in that** the second super-resolution mask layer (12) is a high-to-low layer.

2. Optical recording medium (1) according to claim 1, **wherein** the second super-resolution mask layer (12) is a phase-change layer.

3. Optical recording medium (1) according to claim 1 or 2,
**wherein** the second super-resolution mask layer (12) is an AIST layer or an SbTe layer.

4. Optical recording medium (1) according to one of claims 1 to 3, **wherein** the first super-resolution mask layer (16) is a low-to-high layer.

5. Optical recording medium (1) according to claim 4, **wherein** the first super-resolution mask layer (16) is an InSb layer.

6. Optical recording medium (1) according to one of claims 1 to 3, **wherein** the first super-resolution mask layer (16) is a high-to-low layer.

7. Optical recording medium (1) according to claim 6, **wherein** the first super-resolution mask layer (16) is an AIST layer or an SbTe layer.
